# EUROPÄISCHE PATENTANMELDUNG

(11) **EP 3 144 362 A1**
(43) Veröffentlichungstag der Anmeldung: **22.03.2017**
(21) Anmeldenummer: 16187864.0
(22) Anmeldetag: 08.09.2016
(51) Int. Cl.: C09J 7/02, B60R 13/02, F16B 11/00

(54) **VERWENDUNG EINES EINSEITIG KLEBEND AUSGERÜSTETEN KLEBEBANDS**

(30) Priorität: 18.09.2015 DE 102015217913
(71) Anmelder: tesa SE, 22848 Norderstedt (DE)
(72) Erfinder: de Roton, Gaelle, 22527 Hamburg (DE); Seibert, Matthias, 22453 Hamburg (DE)

(57) **Zusammenfassung**

Verwendung eines einseitig klebend ausgerüsteten Klebebands mit einem Folienträger als Gleit- und Klapperschutzklebeband bei der Fixierung eines Bauteils, insbesondere aus Kunststoff oder Blech, wobei das Klebeband über einer Ausgestaltung auf dem Bauteil angebracht ist, die in einem anderen Bauteil reib- und/oderformschlüssig fixiert wird, wobei das Klebeband zwischen den sich berührenden Abschnitten zwischen den beiden Bauteilen liegt,
dadurch gekennzeichnet, dass
auf der Seite des Folienträgermaterials, die der mit Klebemasse ausgerüsteten Seite gegenüberliegt, eine Schicht aus einer wässrigen Polyurethanlack-Zusammensetzung aufgebracht ist, enthaltend
• mindestens eine wässrige Polyurethandispersion
• eine Verbindung mit blockierten Isocyanatgruppen
• ein Mittel zur Verbesserung des Gleitverhaltens
• mindestens ein Netz- und Verlaufsmittel
• gegebenenfalls übliche Haftvermittler
• gegebenenfalls Farbstoffe und/oder Pigmente.

## Beschreibung

Die Erfindung betrifft die Verwendung eines einseitig klebend ausgerüsteten Klebebands.

Im Fahrzeugbau werden aus optischen oder praktischen Gründen an vielen Stellen Blenden eingesetzt, die auf dem darunter liegenden Karosserieteil fixiert werden. Dies betrifft beispielsweise die B-Säulen in einem Automobil. Bei vielen, gerade neueren Kraftfahrzeugen wird an der B-Säule eine Kunststoffverkleidung wegen der Gewichtsreduzierung, der Kostenreduzierung und vor allem aus Designerwägungen auf das darunter befindliche Blech aufgesteckt. Dazu sind an der Blende beispielsweise Falze vorhanden, die in eine entsprechend geformte Aussparung im Blech (Gegenfalz) eingreifen und mit dieser verhaken.
Problematisch ist dabei, dass die Blende und das Blech unterschiedlich stabil ausgeformt sind sowie auch unterschiedliche Ausdehnungskoeffizienten besitzen. Bei Verwindungen der Automobilkarosserie, wie sie im normalen Fahrbetrieb auftreten, reagieren das Kunststoffteil und das Blechteil unterschiedlich.
Während das Blechteil vergleichsweise stabil ist und nur geringfügige reversible Verformungen aufweist, kann sich das weichere Material der Kunststoffblende sehr viel mehr verformen.
Dies kann dazu führen, dass sich das Kunststoffteil insbesondere im Bereich des in der Aussparung befindlichen Falzes am metallenen Untergrund reibt, was zu störenden und unangenehmen Knarzgeräuschen oder Klappergeräuschen führt, wie sie jedermann aus dem eigenen Auto kennt und als unangenehm empfindet. Derartige Geräusche werden als qualitätsmindernd eingestuft und gerade bei höherwertigen Automobilen nicht vom Kunden beziehungsweise dem Fahrzeughersteller akzeptiert oder toleriert.

Aus diesem Grund werden zwischen Blende und Karosserie, also zwischen den in Kontakt stehenden Stellen, Gleithilfen benötigt, die insbesondere dafür Sorge tragen, dass die besagten Knarzgeräusche sicher unterdrückt werden.

Aufgrund der unterschiedlichen Oberflächengeometrien der Blende und des Bereiches der Karosse gibt es unterschiedliche Anforderungen an das Gleitmittel.

Bei einer geraden Oberfläche beziehungsweise einem rechtwinkligen Falz ist es in der Regel möglich, mittels eines Spritzgusswerkzeugs eine separate Komponente im Spritzgussverfahren auf die Kunststoffblende aufzutragen, um den gleitenden Effekt zu bekommen.

Dazu wird in dem Falzbereich ein flüssiges Gleitmittel aufgetragen (beispielsweise Molykote der Firma DowCorning), das sich dann komplett zwischen den Falzen an die Oberfläche des Anbauteils der Blende anpasst.
Der Nachteil bei derartigen Schmierstoffen ist die Nachhaltigkeit des Mediums, da diese üblicherweise Wasser basierend sind und nach längerer Anwendung am Fahrzeug ausbeziehungsweise abgewaschen werden. Die Knarzgeräusche treten so zeitverzögert auf. Die Einwirkung von Wasser bei der Anwendung ist nicht zu vermeiden, da es sich um Anbauteil im Außenbereich handelt. Durch die Oberflächenbeschaffenheit des Systems wird die Schmierstoffschicht durch das ständige Reiben der beiden Oberflächen dünner, trägt sich ab und reduziert somit kontinuierlich den Knarzschutz.

Aufgabe der vorliegenden Erfindung ist es, ein Klebeband mit einem geeigneten Trägermaterial zur Verfügung zu stellen, das bei der Fixierung von insbesondere Kunststoffteilen auf Karosserien sowohl Gleiteigenschaften zwischen den Kunststoffteilen und der Karosserie sicherstellt als auch Klappergeräusche dämpfen kann.

Gelöst wird diese Aufgabe durch die Verwendung eines einseitig klebend ausgerüsteten Klebebands, wie es im Hauptanspruch näher gekennzeichnet ist. Gegenstand der Unteransprüche sind vorteilhafte Fortbildungen des Erfindungsgegenstands.

Demgemäß betrifft die Erfindung die Verwendung eines einseitig klebend ausgerüsteten Klebebands mit einem Folienträger als Gleit- und Klapperschutzklebeband bei der Fixierung eines Bauteils, insbesondere aus Kunststoff oder Blech, wobei das Klebeband über einer Ausgestaltung auf dem Bauteil angebracht ist, die in einem anderen Bauteil reib- und/oder formschlüssig fixiert wird, wobei das Klebeband zwischen den sich berührenden Abschnitten zwischen den beiden Bauteilen liegt.
Auf der Seite des Folienträgermaterials, die der mit Klebemasse ausgerüsteten Seite gegenüberliegt, ist eine Schicht aus einer wässrigen Polyurethanlack-Zusammensetzung aufgebracht, enthaltend
- mindestens eine wässrige Polyurethandispersion
- eine Verbindung mit blockierten Isocyanatgruppen
- ein Mittel zur Verbesserung des Gleitverhaltens
- mindestens ein Netz- und Verlaufsmittel
- gegebenenfalls übliche Haftvermittler
- gegebenenfalls Farbstoffe und/oder Pigmente

Besonders vorteilhaft weist die zumindest eine Klebeschicht in Längsrichtung des Klebebands eine geringere Breite auf als der Folienträger des Klebebands.

Gemäß einer weiteren vorteilhaften Ausführungsform der Erfindung erstreckt sich der Klebestreifen beginnend an einer Längskante des Folienträgers in Richtung der Mitte des Folienträgers. Auf diese Weise gibt es einen klebenden Streifen auf dem Klebeband und einen nicht klebenden Streifen, dessen Oberfläche ebenfalls als Gleitfläche und zur Dämpfung eingesetzt werden kann. Dieser nicht klebende Streifen wird im Folgenden auch Fahne genannt.

Gemäß einer bevorzugten Ausführungsform macht die Breite des Klebestreifens maximal 50 % der Breite des Folienträgers aus, vorzugsweise zwischen 10 % und 30 %.

Mit zunehmender Breite des Klebestreifens schrumpft die zur Verfügung stehende Gleitfläche/Dämpfungsfläche, denn die Breite der Fahne nimmt ab, während die Klebefläche dementsprechend zunimmt. Es ist deshalb erforderlich, einen Kompromiss dahingehend einzugehen, dass die Gleitfläche/Dämpfungsfläche (Fahne) so groß wie möglich gewählt wird, wobei darauf zu achten ist, dass die sichere Fixierung des Klebebands auf dem Untergrund gewährleistet ist.

In der Praxis haben sich daher Werte zwischen 10 % und 30 % als besonders geeignet erwiesen.

Der klebende Streifen auf dem Klebeband kann auf verschiedene Art und Weise erzeugt werden.

Zu einem kann die Klebemasse auf dem Träger in Form eines in Längsrichtung des Klebebands verlaufenden Streifens aufgebracht werden, das heißt, es ist nur so viel Klebemasse auf den Träger vorhanden, wie tatsächlich erforderlich ist, um die Fixierung des Klebebands sicherzustellen.
Gemäß einer weiteren Ausführungsform besteht der Klebestreifen aus einem doppelseitig klebend ausgerüsteten Klebeband, das auf den Folienträger kaschiert wird.

In einer anderen Variante wird die Klebemasse auf den Folienträger vollflächig aufgebracht und anschließend ein Teilbereich der offenen Klebemasse wieder neutralisiert, so dass als klebender Bereich wieder nur ein Streifen übrig bleibt.
Daneben sind, wenn es sich beispielsweise aufgrund des vorhandenen Anlagenparks nicht vermeiden lässt, auch Kombinationen beider Ausführungsformen möglich, sprich die Klebemasse wird nur partiell aufgebracht und zusätzlich wird ein Teil derselben inaktiviert.

Verfahren, um auf einem Folienträger einen Streifen aus einer Klebemasse aufzubringen, sind dem Fachmann geläufig.
Beispielhaft sei auf das Verfahren in der DE 103 09 447 A1 verwiesen. Hier wird eine Trägerbahn an einer Tauchwalze vorbeigeführt, die in Kontakt mit der Trägerbahn steht, die Walze in einem Bad mit einer Klebemasse rotiert, wodurch die Klebemasse auf die Walzenoberfläche übertragen wird, und die Walze durch Rillen oder eine entsprechende dehäsive Beschichtung derart ausgeführt ist, dass nach dem Lauf der Walze durch das Bad auf der Walzenoberfläche zumindest ein Klebemassenstreifen vorhanden ist, der auf das Trägermaterial übertragen wird.

Beim vollflächigen Auftrag der Klebemasse kann die teilweise Deaktivierung der Klebemasse durch das Aufbringen von Folien oder Papier erfolgen.

In einer anderen Weiterbildung kann der Bereich durch Bestrahlung, Bepuderung oder Neutralisation der Klebemasse erzeugt werden. Alternativ kann ein Lack oder ein Primer an den entsprechenden Stellen aufgetragen werden.
So dann kann die Oberfläche durch chemische Behandlung wie Ätzen verändert werden, um eine nichtklebende Zone zu erzeugen.

Der Klebemassenstreifen kann unterbrochen sein, er kann im Siebdruck aufgebracht sein, also aus unzähligen einzelnen Kleberpunkten bestehen, die untereinander Kontakt haben können. Der Streifen kann aus mehreren dünnen Streifen bestehen, zwischen denen sehr schmale Streifen klebemassefrei sein können.
Dem Fachmann macht es keinerlei Schwierigkeiten dabei weitere Auftragsvarianten darzustellen, die hier im Einzelnen nicht genannt sind, ohne dass es irgendwelcher erfinderischer Tätigkeit bedürfte.

Der Klebemassenstreifen oder auch die Deaktivierung können durch Drucktechnologien wie Rastertief-, Flexo- oder Siebdruck, durch Sprühtechniken wie Ink-Jet, durch partielles Imprägnieren, durch druckloses Aufbringen aus einem Gießkopf, durch Düsenstreifenstrichbeschichtung oder im Rakelauftragsverfahren erzeugt werden.

Bevorzugt, gerade wenn das Gleitband zwischen einer Blende im Automobilbau und der Karosserie (beispielsweise einer Blende auf der B-Säule eines PKWs) eingesetzt wird, beträgt die Breite des Klebebands bevorzugt zwischen 17 und 30 mm, insbesondere zwischen 19 und 25 mm und/oder die Breite des Klebestreifens zwischen 2 und 10 mm, insbesondere zwischen 4 und 7 mm.

In der Praxis haben sich die folgenden Kombinationen besonders bewährt, wobei die äußere Kanten des Klebestreifens mit der äußeren Kante des Folienträgers bevorzugt abschließt.

| Breite Träger | Breite Klebestreifen |
|---|---|
| 19 | 5 |
| 25 | 5 |

Die Dicke des Klebestreifens liegt bevorzugt zwischen 40 und 400 µm, insbesondere bei 100 µm.

Vorzugsweise besteht der Folienträger aus einer PE-Folie, insbesondere aus einer PE-UHMW-Folie. Diese Folie ist alterungsbeständig und abriebfest mit einer extrem hoch verdichteten Oberfläche.

Weiterhin als Folienträger geeignet sind zum Beispiel BOPP, MOPP, PP, PE, Polyester wie PET, PA, PU oder PVC.
Bevorzugt werden Polyolefine, jedoch sind auch Copolymere aus Ethylen und polaren Monomeren wie Styrol, Vinylacetat, Methylmethacrylat, Butylacrylat oder Acrylsäure eingeschlossen. Es kann ein Homopolymer wie HDPE, LDPE, MDPE oder ein Copolymer aus Ethylen einem weiteren Olefin wie Propen, Buten, Hexen oder Octen (zum Beispiel LLDPE, VLLDE) sein. Geeignet sind auch Polypropylene (zum Beispiel Polypropylen-Homopolymere, Polypropylen-Random-Copolymere oder Polypropylen-Block-Copolymere).
Der Folienträger kann geschäumt sein.
Die Folie kann unverstreckt monoaxial und/oder biaxial gereckt sein.

Der Folienträger kann auch aus mehreren einzelnen Lagen besteht, beispielsweise aus zu einer Folie coextrudierte Lagen.

Gemäß einer weiteren vorteilhaften Ausführungsform der Erfindung weist der Folienträger mehrere Schichten auf, wobei zumindest eine der Schichten aus einer Folie besteht. Beispielsweise kann ein Schaumträger mit einer Folienlage kombiniert werden.

Diese Mehrschichtaufbauten des Trägermaterials erlauben, die Dämpf- und Gleiteigenschaften des Klebebands durch die Kombination verschiedener Materialen gezielt einzustellen.

Der Träger und/oder die Klebemasse sind bevorzugt schwarz.

Sofern, was die bevorzugte Variante darstellt, der Träger schwarz ist, tritt das Produkt nicht optisch nachteilig in Erscheinung, auch wenn es nicht optimal verklebt ist, so dass Teilbereiche desselben nicht abgedeckt und somit sichtbar sind.

Als Klebemasse kommt insbesondere eine selbstklebende Masse zum Einsatz, besonders bevorzugt eine handelsübliche druckempfindliche Klebemasse auf PUR, Acrylat- oder Kautschukbasis.

Eine Klebemasse, die sich als besonders geeignet zeigt, ist eine niedermolekulare Acrylatschmelzhaftklebemasse, wie sie unter der Bezeichnung acResin UV oder Acronal®, insbesondere Acronal® DS 3458, von der BASF geführt wird. Diese Klebemasse mit niedrigem K-Wert erhält ihre anwendungsgerechten Eigenschaften durch eine abschließende strahlenchemisch ausgelöste Vernetzung.

Die Schicht aus einer wässrigen Polyurethanlack-Zusammensetzung enthält mindestens eine wässrige Polyurethandispersion, eine Verbindung mit blockierten Isocyanatgruppen, ein Mittel zur Verbesserung des Gleitverhaltens (Reibbeiwertes beziehungsweise Reibungskoeffizienten), mindestens ein Netz- und Verlaufsmittel sowie gegebenenfalls übliche Haftvermittler, Farbstoffe und/oder Pigmente enthalten.

Als Polyurethan-Dispersionen können im Prinzip alle aliphatischen PU-Dispersionen eingesetzt werden, die auf der Basis von Polyestern oder Polycarbonaten und aliphatischen Polyisocyanaten aufgebaut sind. Dabei enthalten diese Polyurethan-Dispersionen Bindemittel, die im Wesentlichen keine freien Isocyanatgruppen mehr enthalten, sie können jedoch selbstvernetzende Gruppen enthalten. Besonders bevorzugt ist die Verwendung von Kombinationen von Polyurethan-Dispersionen auf der Basis von aliphatischen Polyisocyanaten und Polycarbonaten sowie auf der Basis von aliphatischen Polyisocyanaten und Polyestern. Diese Polyurethanbindemittel sind bekannt und gängige Handelsprodukte, sie werden vorzugsweise für wasserbasierte Lackierungen eingesetzt.

Als Verbindung mit blockierten Isocyanatgruppen können alle an sich bekannten vorzugsweise aliphatischen Polyisocyanat-Derivate mit blockierten Isocyanatgruppen eingesetzt werden.

Konkrete Beispiele für derartige blockierte Polyisocyanat-Derivate sind Reaktionsprodukte von niedermolekularen Diolen und/oder Triolen wie beispielsweise Ethylenglycol, Propylenglycol, Butandiol, Trimethylolpropan, Glycerin und dergleichen mit einem stöchiometrischen Überschuss von Diisocyanaten wie 4,4'-Dicyclohexylmethandiisocyanat (H₁₂MDI), 1-Isocyanatomethyl-3-Isocyanato-1,5,5-Trimethyl-cyclohexan (Isophorondiisocyanat, IPDI), Cyclohexan-1,4-diiocyanat, hydriertes Xylylen-diisocyanat (H₆XDI), 1-Methyl-2,4-diisocyanato-cyclohexan, m- oder p-Tetramethylxylendiisocyanat (m-TMXDI, p-TMXDI), Dimerfettsäure-Diisocyanat, Tetramethoxybutan-1,4-diisocyanat, Butan-1,4-diisocyanat, Hexan-1,6-diisocyanat (HDI), 1,6-Diisocyanato-2,2,4-trimethylhexan, 1,6-Diisocyanato-2,4,4-trimethylhexan, Butan-1,4-diisocyanat sowie 1,12-Dodecandiisocyanat (C₁₂DI) mit anschliessender Blockierung der freien Isocyanatgruppen. Eine andere Möglichkeit ist die Verwendung von Biuretisierungs- oder Isocyanuratisierungs-Produkten der vorgenannten Diisocyanate, gefolgt von der Blockierung der freien Isocyanatgruppen.

Die einzusetzenden Blockierungsmittel werden ausgewählt aus Aldoximen, Ketoximen, Lactamen, Imidazolverbindungen, β-Dicarbonylverbindungen wie zum Beispiel Malonsäure-dialkylester oder Acetessigester. Weitere an sich bekannte Blockierungsmittel können Alkohole, Phenole, insbesondere Alkylphenole, Thioalkohole, Thiophenole, sekundäre Amine, Amide, Imide oder Hydroxamsäureester sein. Diese Blockierungsgruppen werden dann beim Aushärten beziehungsweise Vernetzen des Bindemittelsystems, gegebenenfalls unter Mitwirkung von Katalysatoren, freigesetzt, so dass die dann frei werdenden Isocyanatgruppen mit anderen reaktiven Gruppen wie zum Beispiel Hydroxylgruppen, Epoxigruppen, Aminogruppen oder Carboxylgruppen aus anderen Bindemittelbestandteilen reagieren können und so zum Molekulargewichtsaufbau beziehungsweise zur Vernetzung des Bindemittelsystems beitragen.

Als Mittel zur Verbesserung des Gleitverhaltens der Polyurethanlack-Zusammensetzung können pulverförmige Fluorpolymere, insbesondere Polytetrafluoerethylen (PTFE) sowie Copolymere des Perfluorethylens mit anderen olefinisch ungesättigten Comonomeren, die fluorhaltig sein können aber nicht sein müssen, pulverförmige Dialkylsiloxan-Polymere und/oder-Copolymere oder deren Mischungen eingesetzt werden. Bei den pulverförmigen Polydialkylsiloxanen werden vorzugsweise Polydimethylsiloxanpulver eingesetzt. Weiterhin können Emulsionen eines aminofunktionellen Polydimethylsiloxans, eines epoxifunktionellen Polydimethylsiloxans oder eines hydroxialkylfunktionellen Polydimethylsiloxans, gegebenenfalls als Mischung verschiedener Emulsionen und/oder zusammen mit den vorgenannten pulverförmigen Fluorpolymeren oder Siloxanpolymeren eingesetzt werden. Wichtig ist bei der Verwendung von Emulsionen eines Polydimethylsiloxans, dass sie mindestens eine organofunktionelle Gruppe pro Molekül enthalten, die befähigt ist, mit den reaktiven Gruppen des Bindemittels - insbesondere mit den blockierten Isocyanatgruppen - während des Trocknungsvorganges beziehungsweise des Aushärtungsprozesses chemisch zu reagieren, so dass die Polydimethylsiloxankette in das Bindemittelsystem chemisch fest eingebunden wird und nicht migrationsfähig ist.

Netz- und Verlaufsmittel sind alle in der Lacktechnik üblichen wichtigen Additive, hierzu gehören Netz- und Dispergiermittel, gegebenenfalls Verdickungsmittel, Entschäumer, gegebenenfalls Biozide, Filmbildehilfsmittel sowie Gleitmittel. Als Netz- und Dispergiermittel können dabei die üblichen niedermolekularen oder auch polymeren Dispergiermittel eingesetzt werden. Beispielhaft erwähnt seien anionische Tenside, nichtionische Tenside oder gegebenenfalls auch kationische Tenside. Weiterhin können die polyethermodifizierten niedermolekularen Polydimethylsiloxane als Benetzungshilfsmittel eingesetzt werden. Entschäumer reichern sich bekanntlich an der Oberfläche des flüssigen Lacks oder Lackfilms in außerordentlich dünnen Schichten an und unterdrücken dort die Bildung von Schaumblasen oder bringen bereits gebildeten Schaum zum Zerfallen. Als wirkungsvolle Entschäumer können Produkte auf der Basis von natürlichen oder synthetischen Mineralölen, höheren Alkoholen, modifizierten Silikonölen oder auch Polyestern eingesetzt werden. Die Verlaufsmittel sollen die Glättung der Oberfläche der Lackfilme unterstützen, hierfür können hochsiedende Lösungsmittel in geringen Mengen sowie ferner Silikonöle, die teilweise Polyester modifiziert sind, und ähnliche in der Lacktechnik bekannten Hilfsmittel eingesetzt werden. Die Gesamtmenge an Netz- und Verlaufshilfsmitteln in den Formulierungen beträgt bis etwa 5 Gew.-% bezogen auf die Gesamtzusammensetzung, vorzugsweise beträgt die Summe der diversen Netz- und Verlaufshilfsmittel etwa 3 bis 4 Gew.-%.

Die Polyurethanlack-Zusammensetzungen können weiterhin übliche Haftvermittler, vorzugsweise auf der Basis organofunktioneller Silane, enthalten, beispielhaft erwähnt seien hier die Aminoalkylalkoxixilane, 3-Glycidyloxipropyl-trialkoxysilan oder auch Vinyltrialkoxysilan. Dabei sind die Alkoxigruppen in der Regel C₁- bis C₄-Alkoxygruppen.

Weiterhin können die Polyurethanlack-Zusammensetzungen lösliche Farbstoffe, Farbpigmente, Mattungshilfsmittel und andere übliche Hilfsstoffe enthalten. Bevorzugte Mattierungsmittel sind solche auf der Basis von Kieselsäure, ein besonders bevorzugtes schwarzes Farbpigment ist Ruß.

Da das Bindemittelsystem des Polyurethanlacks auf der Basis von wässrigen Dispersionen aufgebaut ist, gestaltet sich der Herstellungsprozess sehr einfach, es werden die Polyurethandispersionen, die blockierte Polyisocyanatverbindung, die Netz- und Verlaufsmittel sowie die weiteren Hilfsmittel und das Wasser miteinander durch intensives Rühren vermischt und dann die Pigmente und das oder die Mittel zur Verbesserung des Gleitverhaltens eingerührt. Dabei kann der Ruß als Farbpigment bereits als vordispergierte Rußpaste oder Rußdispersion eingetragen werden, die Mittel zur Verbesserung des Gleitverhaltens sollen einen Teilchendurchmesser von kleiner als 10 µm, vorzugsweise 2 bis 5 µm haben, so dass eine weitere Vermahlung der pulverförmigen Bestandteile mit dem Bindemittelsystem entfallen kann.

Die Dicke der Schicht aus der wässrigen Polyurethanlack-Zusammensetzung liegt vorzugsweise zwischen 5 und 20 µm, weiter vorzugsweise zwischen 8 und 12 µm.

Aufgrund der geschilderten Eigenschaften wird das Klebeband bei der Fixierung eines Bauteils, insbesondere aus Kunststoff oder Blech, auf einer (Fahrzeug-)Karosserie eingesetzt.
Beispielsweise handelt es sich bei dem ersten Bauteil um eine Blende aus Kunststoff oder Metall, die auf einem Abschnitt einer Karosserie aufgebracht werden soll.
Insbesondere hat sich ein erfindungsgerechtes Klebeband beim Fixieren einer Blende auf der B-Säule eines Automobils bewährt, indem das Klebeband zwischen Blende und Karosserie an den Verknüpfungspunkten eingebracht wird.

Gerade wenn das Gleit- und Klapperschutzband einseitig klebend ausgeführt ist, steht die klebemassefreie Seite vollständig als Gleitfläche zur Verfügung, über die eines der beiden verbundenen Bauteile gleiten kann. Auf der anderen Seite des Klebebands ist die Gleitfläche zwar auf den nichtklebend ausgerüsteten Bereich begrenzt, dennoch ist auch diese Fläche bei geschickter Verklebung des Bands ausreichend.

Weiterhin wird durch den klebenden Streifen des Klebebands erreicht, dass das Klebeband sicher fixiert wird, auch während des Aufbringens des einen Bauteils auf dem anderen. Des Weiteren gewährleistet die Verklebung, dass das Klebeband auch in seiner Funktion als Gleit- und Klapperschutzband an Ort und Stelle verbleibt.

Durch die Kombination aus den Eigenschaften der einzelnen Komponenten des Produktes wie Klebemasse, Trägereigenschaften sowie der Anordnung zwischen dem klebenden Bereich und dem nicht klebenden Bereich erfüllt das erfindungsgemäße Produkt für diese Anwendung alle Anforderungen und reduziert die Knarz- und Klappergeräusche auf Dauer. Die Oberfläche des Klebebandes in Form der Schicht aus der wässrigen Polyurethanlack-Zusammensetzung weist gute Gleiteigenschaften auf, damit die über sie streichenden Teile - ohne großen Widerstand entgegengesetzt zu bekommen - beweglich sind. Darüber hinaus zeigen sie eine ausreichend hohe Stabilität gerade gegen mechanische Reibung, so dass das erfindungsgemäße Klebeband "ein Autoleben lang" in ihrer Funktionalität nicht versagt. Schließlich sind diese gemäß bevorzugten Ausführungsformen derart gestaltet, dass sie optisch nicht auffällig sind.

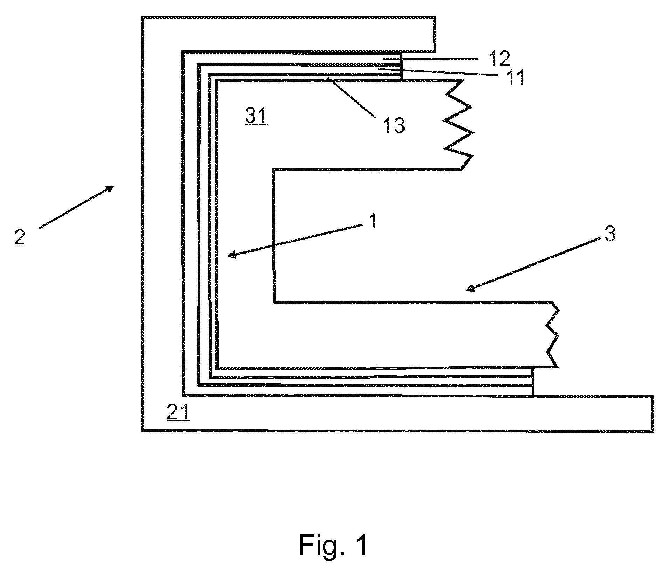

In einer Variante der Erfindung wird ein vollflächig mit einer Klebemasse ausgerüstetes Klebeband eingesetzt, wie es die Figur 1 darstellt.
In der Figur 1 ist gezeigt, wie ein vollflächig mit einer Klebemasse 12 ausgerüstetes Klebeband 1 auf einem U-förmigen Falz 21, wie er auf der Blende 2 für eine B-Säule 3 einer Karosserie vorgesehen ist, aufgebracht ist. Auf die B-Säule 3 wird die Blende 2 aufgeklipst, so dass der an der Blende 2 vorgesehene Falz 21 in den Gegenfalz 31 der B-Säule 3 eingreift. Dargestellt ist die Perspektive von oben auf die durchtrennt gezeigte B-Säule beziehungsweise Blende.
Zwischen den Falzen 21, 31 ist das Klebeband 1, um eine Relativbewegung der beiden Bauteile 2, 3 zueinander zu ermöglichen, ohne dass störende Geräusche auftreten.
Das Klebeband 1 weist einen Folienträger 11, auf der mit einer Klebemasse 12 vorsehen ist. Oberseitig ist auf dem Folienträger 11 die Schicht 13 aus der wässrigen Polyurethanlack-Zusammensetzung aufgebracht. Die Klebemassenschicht 12 fixiert das Klebeband 1 in seiner Position.

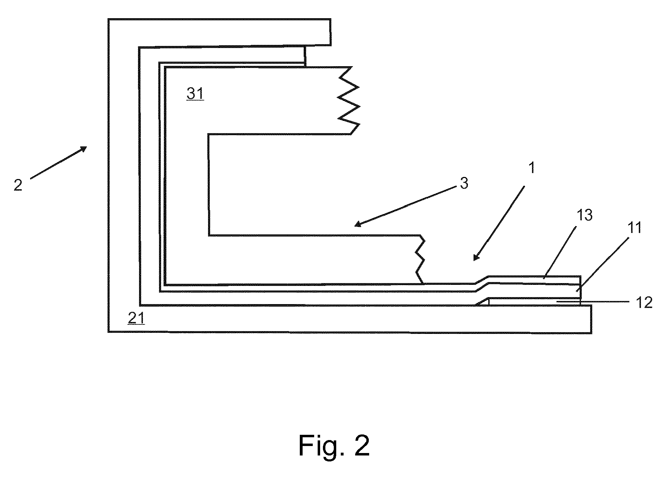

In der Figur 2 ist gezeigt, wie das erfindungsgemäße Klebeband 1 im Falz 31 appliziert wird. Das Klebeband 1 weist einen Folienträger 11 auf, auf der nur ein Streifen einer Klebemasse 12 vorgesehen ist. Oberseitig ist auf dem Folienträger 11 wieder die Schicht 13 aus der wässrigen Polyurethanlack-Zusammensetzung aufgebracht. Der Streifen 12 fixiert das Klebeband 1 in seiner Position. Der nichtklebende Teil des Klebebands 1, die Fahne, steht vollständig als Gleit- und Klapperschutzband zur Verfügung.

Bei dem Verbau der Blende 2 wird das erfindungsgemäße Klebeband 1 durch den an der Karosserie vorgesehenen Gegenfalz 31 in den Falz 21 gedrückt und liegt somit zwischen Blende 2 und Karosse 3 als Gleitmedium, welches im Bereich der Fahne weder an der Blende 2 noch an der Karosse 3 klebt und somit flexibel die Knarz- und Klappergeräusche zwischen den Teilen verhindert.

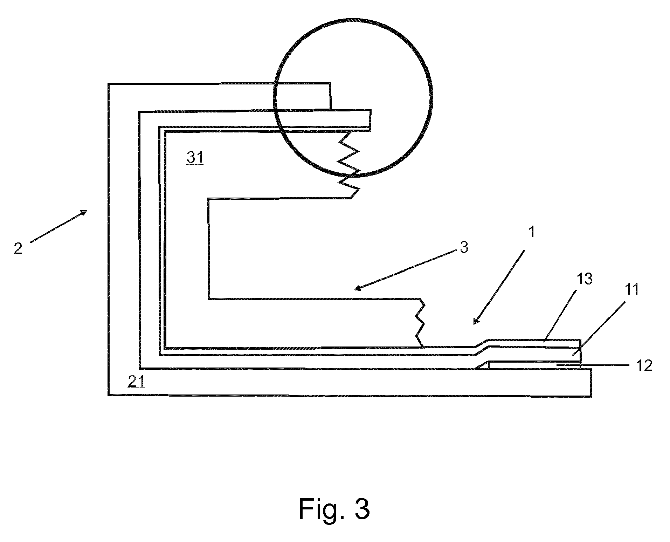

In der Figur 3 verweist der Kreis auf die Sichtkante. Der Folienträger 11 des Klebebands 1 ragt unter der Blende 2 hervor. Dies ist insofern unproblematisch, wenn das Klebeband 1 schwarz ist und somit der überstehende Bereich optisch nicht auffällig ist.

Im Folgenden wird die Erfindung anhand eines Beispiels näher erläutert, ohne die Erfindung damit einschränken zu wollen:

Das einseitig mit einer Klebemasse ausgerüstete Klebeband ist wie folgt aufgebaut und besitzt die angegebenen technischen Werte:

| Träger | Klebmasse | Dicke | Reißdehnung (längs) | Höchstzugkraft (längs) | Klebkraft (Stahl) | Breite | Dämpfung |
|---|---|---|---|---|---|---|---|
| PE | Acrylat | 280 µm | 20% | 40 N/cm | 4,3 N/cm | 19 mm | 5 dB |

Die Acrylat-Klebemasse ist mit 30 g/m² auf die Trägerfolie aufgetragen, was einer Dicke von ungefähr 30 µm entspricht.
Des Weiteren ist die Klebebeschichtung mit Trennpapier abgedeckt.

Auf der Seite des Folienträgermaterials, die der mit Klebemasse ausgerüsteten Seite gegenüberliegt, ist eine Schicht aus einer wässrigen Polyurethanlack-Zusammensetzung aufgebracht, die die folgende Zusammensetzung aufweist:

| Rohstoff | Gew.-% |
|---|---|
| PU-Dispersion, aliphatisch (Polycarbonat) (40 %ig) | 17,00 |
| PU-Dispersion, aliphatisch (Polyester) (36 %ig) | 28,00 |
| Benetzungshilfsmittel/Sulfobernsteinsäureester-Natrium-Salz | 0,50 |
| Kieselsäure/Mattierungsmittel-TS-100 | 1,50 |
| Entschäumer/Polyester-Basis | 0,10 |
| Teflon/Polytetrafluorethylen, mittlerer Teilchendurchmesser 2 bis 5 µm | 3,00 |
| Entblasungsmittel/Gemisch-oberflachenaktiver-Polymere | 0,50 |
| Benetzungshilfsmittel/Polyethermodifiziertes-Polydimethylsiloxan | 1,00 |
| Benetzungshilfsmittel/Polydimethylsiloxan, polyethermodifiziert | 1,00 |
| Aminofunktionelles-Polydimethylsiloxan O/W-Emulsion | 2,00 |
| 1,3,5-tris[6-[[[[(1Methylpropyliden)amino]oxy]carbonyl]amino]hexyl-1,3,5-triazin-2,4,6[1H,3H,5H]-trion-Isocyanat, geblockt mit Methylethylketoxim, Dispersion | 5,00 |
| Rußpaste (25 Gew.-% Ruß in Wasser) | 2,00 |
| Wasser, vollentsalzt | 38,40 |
| Summe | 100 |

Eine Rußpaste besteht aus den folgenden Bestandteilen (Angabe in Gew.-%):

| | |
|---|---|
| Fettalkoholedoxilate | 15,00 |
| Entschäumer auf Weißöl-Basis, Netzmittel und Silikonen | 1,00 |
| Ruß | 25,00 |
| Wasser, vollentsalzt | 59,00 |

Die Bestandteile der Rußpaste werden mit einer Perlmühle gemahlen, bis der Mahlgrad unter 50 µm liegt.

Die Herstellung des Lackes erfolgt, indem die PU-Dispersionen vorgelegt werden, dann folgt die Zugabe der Lack-und Benetzungshilfsmittel, und es wird ein Anteil des Wassers hinzugegeben. Anschließend wird die Rußpaste hinzugegeben.
Es wird weitere 15 Minuten gerührt, und das Produkt über ein 50 µm-Filter filtriert. Danach erfolgt die Zugabe des PTFE-Pulvers, des Silikonharzes und der Silikonadditive.

### Prüfmethoden

Die Messungen werden bei einem Prüfklima von 23 ± 1 °C und 50 ± 5 % rel. Luftfeuchte durchgeführt.

Das Zugdehnungsverhalten des Klebebandes wird an Prüflingen vom Typ 2 (rechteckige, 150 mm lange und nach Möglichkeit 15 mm breite Prüfstreifen) nach DIN EN ISO 527-3/2/300 mit einer Prüfgeschwindigkeit von 300 mm/min, einer Einspannlänge von 100 mm und einer Vorkraft von 0,3 N/cm ermittelt, wobei Muster zur Ermittlung der Daten mit scharfen Klingen zugeschnitten werden.
Das Zugdehnungsverhalten wird, wenn nicht anders angegeben, in Maschinenrichtung (MD, Laufrichtung) geprüft. Die Kraft wird in N/Streifenbreite und die Bruchdehnung in % ausgedrückt. Die Prüfergebnisse, insbesondere die Bruchdehnung (Reißdehnung), sind durch eine hinreichende Zahl von Messungen statistisch abzusichern.

Die Klebkräfte werden bei einem Abzugswinkel von 180° nach AFERA 4001 an (nach Möglichkeit) 15 mm breiten Teststreifen bestimmt. Hierbei werden Stahlplatten nach AFERA-Norm als Prüfuntergrund verwendet, soweit kein anderer Haftgrund genannt ist.

Die Dicke des Trägers des Klebebandes wird nach DIN 53370 bestimmt (die Haftklebstoffschicht wird nicht berücksichtigt).

Die Dämpfungseigenschaften werden nach LV315 bestimmt.

## Patentansprüche

1. Verwendung eines einseitig klebend ausgerüsteten Klebebands mit einem Folienträger als Gleit- und Klapperschutzklebeband bei der Fixierung eines Bauteils, insbesondere aus Kunststoff oder Blech, wobei das Klebeband über einer Ausgestaltung auf dem Bauteil angebracht ist, die in einem anderen Bauteil reib- und/oderformschlüssig fixiert wird, wobei das Klebeband zwischen den sich berührenden Abschnitten zwischen den beiden Bauteilen liegt,
**dadurch gekennzeichnet, dass**
auf der Seite des Folienträgermaterials, die der mit Klebemasse ausgerüsteten Seite gegenüberliegt, eine Schicht aus einer wässrigen Polyurethanlack-Zusammensetzung aufgebracht ist, enthaltend
• mindestens eine wässrige Polyurethandispersion
• eine Verbindung mit blockierten Isocyanatgruppen
• ein Mittel zur Verbesserung des Gleitverhaltens
• mindestens ein Netz- und Verlaufsmittel
• gegebenenfalls übliche Haftvermittler
• gegebenenfalls Farbstoffe und/oder Pigmente.

2. Verwendung nach Anspruch 1,
**dadurch gekennzeichnet, dass**
die zumindest eine Klebeschicht in Längsrichtung des Klebebands eine geringere Breite aufweist als der Folienträger des Klebebands.

3. Verwendung nach Anspruch 1 oder 2,
**dadurch gekennzeichnet, dass**
der Klebestreifen sich beginnend an einer Längskante des Folienträgers in Richtung der Mitte des Folienträgers erstreckt.

4. Verwendung nach zumindest einem der Ansprüche 1 bis 3,
**dadurch gekennzeichnet, dass**
die Breite des Klebestreifens maximal 50 % der Breite des Folienträgers, vorzugsweise zwischen 10 % und 30 % ausmacht.

5. Verwendung nach zumindest einem der vorherigen Ansprüche,
**dadurch gekennzeichnet, dass**
die Breite des Klebebands zwischen 17 und 30 mm, insbesondere zwischen 19 und 25 mm und/oder die Breite des Klebestreifens zwischen 2 und 10 mm, insbesondere zwischen 4 und 7 mm liegt.

6. Verwendung nach zumindest einem der vorherigen Ansprüche,
**dadurch gekennzeichnet, dass**
der Folienträger, die Polyurethanlackschicht und/oder die Klebemasse schwarz sind.

7. Verwendung nach zumindest einem der vorherigen Ansprüche,
**dadurch gekennzeichnet, dass**
die Klebemasse auf dem Trägermaterial partiell in Form eines Streifens aufgebracht ist.

8. Verwendung nach zumindest einem der vorherigen Ansprüche,
**dadurch gekennzeichnet, dass**
die Klebemasse auf dem Trägermaterial vollflächig aufgebracht ist und anschließend partiell bezüglich der Klebewirkung deaktiviert wird, so dass auf dem Folienträger ein klebender Streifen verbleibt.

9. Verwendung nach zumindest einem der vorherigen Ansprüche,
**dadurch gekennzeichnet, dass**
das Klebeband bei der Fixierung eines Bauteils aus Kunststoff oder Blech auf einer Karosserie eingesetzt wird.

10. Verwendung nach Anspruch 9, wobei das eine Bauteil eine Kunststoffblende ist, die auf der B-Säule eines Automobils aufgebracht wird.
